# EUROPEAN PATENT APPLICATION

(11) **EP 4 398 333 A1**
(43) Date of publication of application: **10.07.2024**
(21) Application number: 23179110.4
(22) Date of filing: 14.06.2023
(51) Int. Cl.: H01M 4/134, H01M 4/1395, H01M 4/66, H01M 4/70, H01M 4/74, H01M 10/054

(54) **NEGATIVE ELECTRODE STRUCTURE OF ALUMINUM BATTERY**

(30) Priority: 05.01.2023 TW 112100413
(71) Applicant: APh ePower Co., Ltd., Kaohsiung City 821 (TW)
(72) Inventor: WU, Jui-Hsuan, 821 Kaohsiung City (TW); TSAI, Shih Po Ta, 821 Kaohsiung City (TW); YANG, Chun-Chieh, 821 Kaohsiung City (TW)
(74) Representative: Becker, Eberhard

(57) **Abstract**

A negative electrode structure (100, 200) of an aluminum battery, including a metal substrate (110) and multiple bumps (120), is provided. The bumps (120) are disposed on a first surface (111) of the metal substrate (110). A size range of the bumps (120) is between 5 mm and 500 mm.

## Description

### BACKGROUND

### Technical Field

The disclosure relates to a negative electrode structure, and in particular to a negative electrode structure of an aluminum battery.

### Description of Related Art

Generally speaking, the aluminum battery is composed of a positive electrode, a negative electrode, a separator, and an electrolyte. During the process of continuous charging and discharging, the electrolyte produces an electrochemical reaction (an electrochemical deposition) on the negative electrode through redox. Therefore, how to increase the reaction ability of the electrolyte of the aluminum battery on the negative electrode to improve the performance thereof is the target of development for persons skilled in the art.

### SUMMARY

The disclosure provides a negative electrode structure of an aluminum battery, which can increase the reaction ability of an electrolyte on a negative electrode, thereby improving the performance of the aluminum battery.

A negative electrode structure of an aluminum battery of the disclosure includes a metal substrate and multiple bumps. The bumps are disposed on a first surface of the metal substrate. A size range of the bumps is between 5 micrometers (µm) and 500 µm.

In an embodiment of the disclosure, a material of the metal substrate includes aluminum, nickel, copper, titanium, tin, zinc, stainless steel, or an alloy thereof.

In an embodiment of the disclosure, a material of the bumps includes aluminum, nickel, copper, titanium, tin, zinc, stainless steel, or an alloy thereof.

In an embodiment of the disclosure, the bumps include circular columns, polygonal columns, or a combination thereof.

In an embodiment of the disclosure, an arrangement manner of the bumps includes an array arrangement, a regular staggered arrangement, or an irregular arrangement.

In an embodiment of the disclosure, a thickness range of the metal substrate is between 10 µm and 500 µm.

In an embodiment of the disclosure, the negative electrode structure of the aluminum battery further includes multiple holes. Each hole runs through the first surface to a second surface of the metal substrate.

In an embodiment of the disclosure, a size range of the holes is between 10 µm and 500 µm.

In an embodiment of the disclosure, the holes are arranged around the bumps.

In an embodiment of the disclosure, the holes include circular holes, polygonal holes, or a combination thereof.

Based on the above, a special structural design is performed for the surface of the negative electrode structure of the aluminum battery of the disclosure, so that the contact reaction area between an electrolyte and the negative electrode structure is increased through the application of the bumps. In this way, the reaction ability of the electrolyte on the negative electrode can be increased, thereby improving the performance of the aluminum battery.

In order for the features and advantages of the disclosure to be more comprehensible, the following specific embodiments are described in detail in conjunction with the drawings.

### BRIEF DESCRIPTION OF THE DRAWINGS

FIG. 1 is a schematic partial perspective view of a negative electrode structure of an aluminum battery according to an embodiment of the disclosure.
FIG. 2 is a schematic partial perspective view of a negative electrode structure of an aluminum battery according to another embodiment of the disclosure.
FIG. 3 is a schematic top view of FIG. 2.
FIG. 4 is a schematic view of results of comparing examples and a comparative example in terms of capacity performance.

### DETAILED DESCRIPTION OF DISCLOSED EMBODIMENTS

In order for the content of the disclosure to be easier to understand, the following specific embodiments are given as examples in which the disclosure can actually be implemented. For the sake of clarity, many practical details are described in the following description. It should be understood, however, that the practical details should not be used to limit the disclosure. In other words, in some embodiments of the disclosure, the practical details are unnecessary.

The disclosure will be described more fully with reference to the drawings of the embodiments. However, the disclosure may also be embodied in various forms and should not be limited to the embodiments described herein. The thickness, the size, or the magnitude of a layer or a region in the drawings may be exaggerated for clarity. The same or similar reference numerals indicate the same or similar elements, which will not be repeated one by one in the following paragraphs.

Unless otherwise defined, all terms (including technical and scientific terms) used herein have the same meaning as commonly understood by persons of ordinary skill in the art to which the disclosure belongs.

In the following detailed description, for purposes of illustration and not limitation, exemplary embodiments disclosing specific details are set forth in order to provide a thorough understanding of various principles of the disclosure. However, it will be apparent to persons of ordinary skill in the art that the disclosure may be practiced in other embodiments that depart from the specific details disclosed herein, having the benefit of the disclosure. Moreover, the description of conventional devices, methods, and materials may be omitted so as not to obscure the description of the various principles of the disclosure.

Unless otherwise stated, the term "between" used in the specification to define a value range is intended to cover a range equal to and between the stated endpoint values. For example, a size range between a first value and a second value means that the size range may cover the first value, the second value, and any value between the first value and the second value.

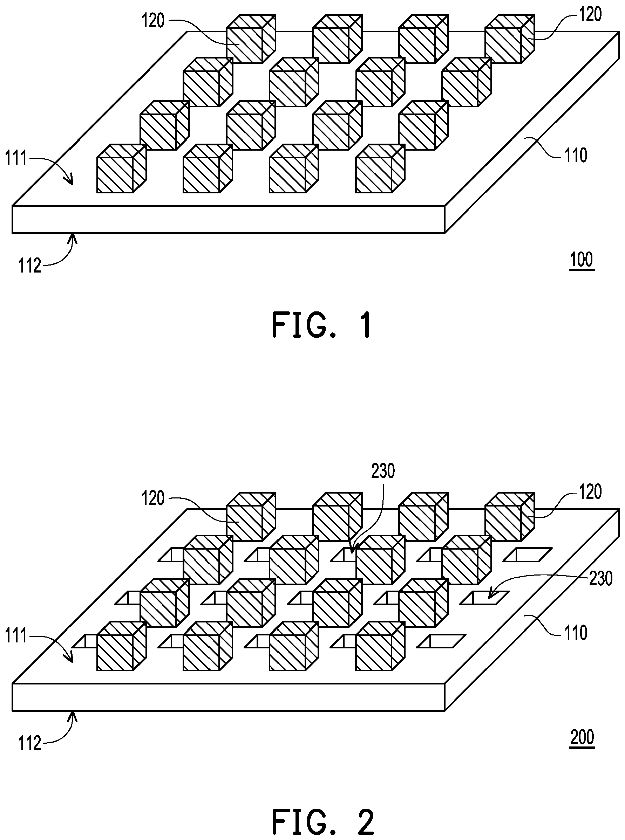

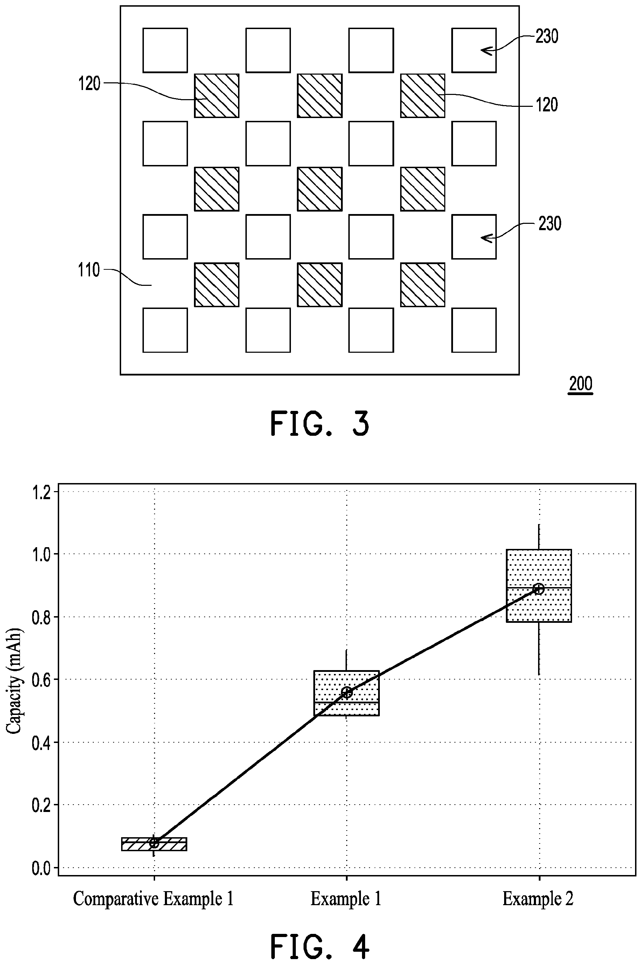

FIG. 1 is a schematic partial perspective view of a negative electrode structure of an aluminum battery according to an embodiment of the disclosure. FIG. 2 is a schematic partial perspective view of a negative electrode structure of an aluminum battery according to another embodiment of the disclosure. FIG. 3 is a schematic top view of FIG. 2. FIG. 4 is a schematic view of results of comparing examples and a comparative example in terms of capacity performance.

Please refer to FIG. 1. A negative electrode structure 100 of an aluminum battery of the embodiment includes a metal substrate 110 and multiple bumps 120, wherein the metal substrate 110 has a first surface 111 and a second surface 112 opposite to each other. In addition, the bumps 120 are disposed on the first surface 111, wherein the size range of the bumps 120 is between 5 µm and 500 µm. Accordingly, a special structural design is performed for the surface of the negative electrode structure 100 of the aluminum battery of the embodiment, so that the contact reaction area between an electrolyte and the negative electrode structure 100 is increased through the application of the bumps 120. In this way, the reaction ability of the electrolyte on the negative electrode can be increased, thereby improving the performance of the aluminum battery. Here, compared with a general battery (for example, a lithium battery) in which an electrolyte does not react with an electrode, so the contact area between the electrolyte and the electrode does not need to be increased, since the electrolyte of the aluminum battery participates in the redox reaction during the operation of the battery, and electrochemical deposition is performed on the electrode, the design of the negative electrode structure affects the ability of the electrolyte to flow, diffuse, and replenish to the surface of the negative electrode, thereby affecting the redox reaction of the battery. Therefore, the technical effects of the disclosure are not the same as the technical effects that the general battery (for example, the lithium battery) can achieve. In addition, the electrolyte may be any suitable ionic liquid (for example, EMIC, BMIC, etc.) that may be applied to the aluminum battery, but the disclosure is not limited thereto.

Furthermore, when the negative electrode structure cannot provide enough reaction space for the electrolyte to perform the electrochemical reaction smoothly, the electrochemical reaction is easily transferred to a separator, causing metal deposition on the separator, thereby conducting positive and negative electrodes to cause a short circuit of the battery, which affects the life and the performance of the battery. Therefore, the application of the bumps 120 of the embodiment can provide sufficient reaction space for the electrolyte on the negative electrode structure 100 of the aluminum battery to smoothly perform the electrochemical reaction, while slowing down metal deposition in the separator, which prolongs the capacity and the performance of the aluminum battery, but the disclosure is not limited thereto.

In some embodiments, using the design of the bumps 120 of the embodiment can increase the contact area by at least 30%, but the disclosure is not limited thereto.

In the embodiment, as shown in FIG. 1, the bump 120 is a polygonal column (a square column), so the size may be values corresponding to the length, the width, and the height of the square column. In other words, in the embodiment, the value ranges of the length, the width, and the height of the bump 120 are all between 5 µm and 500 µm, but the disclosure is not limited thereto. In other unillustrated embodiments, the bump may also be in the form of a circular column or other polygonal columns, such as a rhombus column and a hexagonal column, wherein the value ranges of the diameter and the height of the circular column may all be between 5 µm and 500 µm, and the value ranges of the side lengths and the height of the polygonal column may all be between 5 µm and 500 µm. Here, the bumps 120 may be regarded as a single shape, but the disclosure is not limited thereto. In an unillustrated embodiment, the bumps 120 may include columns with different shapes, so the bumps 120 may include circular columns, polygonal columns, or a combination thereof.

In some embodiments, the sizes of the bumps 120 may be the same or different, wherein the bumps 120 have consistency when the sizes are the same, so that the increased contact reaction area can be maximized, but the disclosure is not limited thereto.

In some embodiments, the arrangement manner of the bumps 120 includes an array arrangement, a regular staggered arrangement, or an irregular arrangement. For example, as shown in FIG. 1, the bumps 120 are in the array arrangement, but the disclosure is not limited thereto.

In some embodiments, the material of the metal substrate 110 includes aluminum (Al), nickel (Ni), copper (Cu), titanium (Ti), tin (Sn), zinc (Zn), stainless steel, or an alloy thereof, and the material of the bumps 120 includes aluminum, nickel, copper, titanium, tin, zinc, stainless steel, or an alloy thereof, wherein the materials of the metal substrate 110 and the bumps 120 may be the same or different, which is not limited in the disclosure.

In some embodiments, the bumps 120 may be formed on the metal substrate 110 by electroplating or electroforming technology, so the bumps 120 may be in direct contact with the metal substrate 110, but the disclosure is not limited thereto. The bumps 120 may also be formed by other suitable manners.

In addition, when an electrolyte with high viscosity is used in the aluminum battery, since the electrolyte itself does not flow and diffuse easily, the ability of the negative electrode structure 100 to replenish the electrolyte and the ability of the electrolyte to flow in the negative electrode structure 100 need to be further improved, while increasing the contact reaction area. Therefore, when the electrolyte with high viscosity is used in the aluminum battery, multiple holes 230 may be further included as shown in a negative electrode structure 200 of FIG. 2, wherein each hole 230 runs through the first surface 111 to the second surface 112. Therefore, a mesh structure formed by the holes 230 can improve the fluidity of the electrolyte to help the electrolyte to pass through the electrode, so as to maintain the speed of the negative electrode structure 200 to replenish the electrolyte, and further improve the performance of the aluminum battery.

In some embodiments, since the hole 230 completely runs through the metal substrate 110, the depth of the hole 230 may be equal to the thickness of the metal substrate 110, wherein the thickness range of the metal substrate 110 may be between 10 µm and 500 µm, but the disclosure is not limited thereto.

In some embodiments, the size range of the holes 230 is between 10 µm and 500 µm, wherein the holes 230 include circular holes, polygonal holes (which are shown as square holes in the embodiment, and may also be rhombus holes or hexagonal holes in an unillustrated embodiment), or a combination thereof. Here, the definition of the size and the shape of the hole 230 is similar to that of the bump 120. For example, the size of the square hole is the values of the length and the width, which will not be repeated here.

In some embodiments, the holes 230 are disposed around the bumps 120, but the disclosure is not limited thereto.

In some embodiments, the structure of FIG. 2 may be an electroformed nickel mesh formed by integrally forming a nickel substrate, but the disclosure is not limited thereto.

It should be noted that the holes 230 are optional. When the viscosity of the selected electrolyte is low, the negative electrode structure may only include the bumps 120 without including the holes 230. In addition, in the above content, other unspecified compositions (for example, the positive electrode, the negative electrode, and/or the separator) and configurations of the aluminum battery should be obtainable by persons of ordinary skill in the art according to any content covered within the spirit and the scope of the appended claims, which will not be repeated here.

Hereinafter, with reference to Example 1, Example 2, and Comparative Example 1, the effects of the negative electrode structure of the aluminum battery of the disclosure applied to the aluminum battery will be described in more detail. In addition, although Example 1 and Example 2 are described below, without exceeding the scope of the disclosure, details of materials used, processes, etc. may be appropriately changed, and the disclosure should not be limited by the examples described below.

### <Comparative Example 1>

First, an aluminum foil was used for cutting, a negative electrode (with a thickness of 0.05 mm and a size of 15 mm × 25 mm) was obtained, a graphite slurry was coated on a nickel foil (with a thickness of 0.03 mm and a size of 15 mm × 25 mm), and a positive electrode was obtained. Then, the negative electrode and the positive electrode were arranged in order and placed into an electrolytic cell rich in electrolyte (aluminum chloride/1-ethyl-3-methylimidazolium chloride, wherein the molar ratio was 1.8:1), and an aluminum battery of Comparative Example 1 was obtained.

### <Example 1>

According to the preparation manner of the aluminum battery described in Comparative Example 1, the difference was that the aluminum foil of the negative electrode was replaced by an aluminum foil nickel-plated bump (a nickel-plated bump on an aluminum substrate), wherein the length, the width, and the height of the bump were all 40 µm, and an aluminum battery of Example 1 was obtained.

### <Example 2>

According to the preparation manner of the aluminum battery described in Comparative Example 1, the difference was that the negative electrode was replaced with a three-dimensional electroformed nickel mesh with hole and bump structures at the same time, wherein the thickness of the electroformed nickel mesh was 40 µm, the size of the hole of the nickel mesh was 40 µm, the depth of the hole was 40 µm (which runs through the entire nickel substrate), and the length, the width, and the height of the bump were all 40 µm, and an aluminum battery of Example 2 was obtained.

The capacity performances of Example 1, Example 2, and Comparative Example 1 were tested, an electrochemical workstation of BioLogic (BioLogic BCS-815) was used to perform charge and discharge tests on the aluminum batteries obtained in Example 1, Example 2, and Comparative Example 1, and the maximum discharge capacities were measured with a charge and discharge rate of 4C. The results are shown in FIG. 1. The following conclusions may be drawn from the results of FIG. 1. Through adding the bump design to the surface of the metal substrate, the reaction area of the negative electrode structure can be increased, and the reaction ability of the negative electrode structure can be effectively improved, thereby increasing the capacity of the aluminum battery. In addition, compared with Example 1 and Comparative Example 1, the reaction performance (capacity) of the negative electrode structure can be increased to 7 times. Compared with Example 2 and Comparative Example 1, when the negative electrode structure is the metal mesh material with the bump structure and the hole structure at the same time, the electrolyte may enter and flow from the hole structure, while having a high reaction area without the ability of the electrolyte to diffuse, flow, and replenish being inhibited by the structure. At this time, compared with Comparative Example 1, the capacity of Example 2 can be increased to 11 times, that is, when the bump design is added to the negative electrode structure, the reaction ability of the negative electrode structure can already be effectively improved, and when the hole design is further added to the negative electrode structure, the reaction ability of the negative electrode structure can be even further improved.

In summary, the special structural design is performed for the surface of the negative electrode structure of the aluminum battery of the disclosure, so that the contact reaction area between the electrolyte and the negative electrode structure is increased through the application of the bumps. In this way, the reaction ability of the electrolyte on the negative electrode can be increased, thereby improving the performance of the aluminum battery.

Although the disclosure has been disclosed in the above embodiments, the embodiments are not intended to limit the disclosure. Persons skilled in the art may make some changes and modifications without departing from the spirit and scope of the disclosure. Therefore, the protection scope of the disclosure shall be defined by the appended claims.

## Claims

1. A negative electrode structure (100, 200) of an aluminum battery, comprising:
a metal substrate (110), having a first surface (111) and a second surface (112) opposite to each other; and
a plurality of bumps (120), disposed on the first surface (111), wherein a size range of the bumps (120) is between 5 µm and 500 µm.

2. The negative electrode structure (100, 200) of the aluminum battery according to claim 1, wherein a material of the metal substrate (110) comprises aluminum, nickel, copper, titanium, tin, zinc, stainless steel, or an alloy thereof.

3. The negative electrode structure (100, 200) of the aluminum battery according to claim 1, wherein a material of the bumps (120) comprises aluminum, nickel, copper, titanium, tin, zinc, stainless steel, or an alloy thereof.

4. The negative electrode structure (100, 200) of the aluminum battery according to claim 1, wherein the bumps (120) comprise circular columns, polygonal columns, or a combination thereof.

5. The negative electrode structure (100, 200) of the aluminum battery according to claim 1, wherein an arrangement manner of the bumps (120) comprises an array arrangement, a regular staggered arrangement, or an irregular arrangement.

6. The negative electrode structure (100, 200) of the aluminum battery according to claim 1, wherein a thickness range of the metal substrate (110) is between 10 µm and 500 µm.

7. The negative electrode structure (100, 200) of the aluminum battery according to claim 1, further comprising a plurality of holes (230), wherein each of the holes (230) runs through the first surface (111) to the second surface (112).

8. The negative electrode structure (100, 200) of the aluminum battery according to claim 7, wherein a size range of the holes (230) is between 10 µm and 500 µm.

9. The negative electrode structure (100, 200) of the aluminum battery according to claim 7, wherein the holes (230) are disposed around the bumps (120).

10. The negative electrode structure (100, 200) of the aluminum battery according to claim 7, wherein the holes (230) comprise circular holes, polygonal holes, or a combination thereof.

## Amended claims

### Amended claims in accordance with Rule 137(2) EPC.

1. A negative electrode structure (100, 200) of an aluminum battery, comprising:
a metal substrate (110), having a first surface (111) and a second surface (112) opposite to each other; and
a plurality of bumps (120), disposed on the first surface (111), wherein a size range of the bumps (120) is between 5 µm and 500 µm,
wherein the negative electrode structure (100, 200) of the aluminum battery is **characterized by** further comprising:
a plurality of holes (230), wherein each of the holes (230) runs through the first surface (111) to the second surface (112).

2. The negative electrode structure (100, 200) of the aluminum battery according to claim 1, wherein a material of the metal substrate (110) comprises aluminum, nickel, copper, titanium, tin, zinc, stainless steel, or an alloy thereof.

3. The negative electrode structure (100, 200) of the aluminum battery according to claim 1, wherein a material of the bumps (120) comprises aluminum, nickel, copper, titanium, tin, zinc, stainless steel, or an alloy thereof.

4. The negative electrode structure (100, 200) of the aluminum battery according to claim 1, wherein the bumps (120) comprise circular columns, polygonal columns, or a combination thereof.

5. The negative electrode structure (100, 200) of the aluminum battery according to claim 1, wherein an arrangement manner of the bumps (120) comprises an array arrangement, a regular staggered arrangement, or an irregular arrangement.

6. The negative electrode structure (100, 200) of the aluminum battery according to claim 1, wherein a thickness range of the metal substrate (110) is between 10 µm and 500 µm.

7. The negative electrode structure (100, 200) of the aluminum battery according to claim 1, wherein a size range of the holes (230) is between 10 µm and 500 µm.

8. The negative electrode structure (100, 200) of the aluminum battery according to claim 1, wherein the holes (230) are disposed around the bumps (120).

9. The negative electrode structure (100, 200) of the aluminum battery according to claim 1, wherein the holes (230) comprise circular holes, polygonal holes, or a combination thereof.
